# EUROPÄISCHE PATENTSCHRIFT

(11) **EP 2 812 130 B1**
(45) Veröffentlichungstag und Bekanntmachung des Hinweises auf die Patenterteilung: **28.03.2018**
(21) Anmeldenummer: 13706938.1
(22) Anmeldetag: 07.02.2013
(51) Int. Cl.: B05D 7/14, B05D 7/16, B05D 1/18, C09D 5/08, C09D 133/14, C23C 18/16, C23C 18/18

(54) **VERFAHREN ZUM BESCHICHTEN VON METALLISCHEN OBERFLÄCHEN**
METHOD FOR COATING METALLIC SURFACES OF SUBSTRATES
PROCÉDÉ DESTINÉ À REVÊTIR DES SURFACES MÉTALLIQUES DE SUBSTRATS

(30) Priorität: 07.02.2012 DE 102012201804; 26.11.2012 DE 102012221521
(43) Veröffentlichungstag der Anmeldung: 17.12.2014
(73) Patentinhaber: Chemetall GmbH, 60487 Frankfurt am Main (DE)
(72) Erfinder: WASSERFALLEN, Daniel, 55128 Mainz (DE); SCHWAMB, Michael, 60325 Frankfurt (DE); FRENKEL, Aliaksandr, 60385 Frankfurt (DE); SOTKE, Vera, 60316 Frankfurt am Main (DE); BREMSER, Wolfgang, 33100 Paderborn (DE); DROLL, Martin, 33189 Schlangen (DE); SEEWALD, Oliver, 34431 Marsberg (DE); EILINGHOFF, Ron, 60487 Frankfurt (DE); GEROLD, Stephanie, 33102 Paderborn (DE); NIESEN, Evgenija, 59494 Soest (DE); SCHACHTSIEK, Lars, 33102 Paderborn (DE); TRAUT, Manuel, 59069 Hamm (DE)
(74) Vertreter: BASF IP Association
(86) Internationale Anmeldenummer: PCT/EP2013/052363
(87) Internationale Veröffentlichungsnummer: WO 2013/117611

(56) Entgegenhaltungen:
- EP-A2- 1 144 530
- WO-A2-2011/023587
- DE-A1-102007 011 553
- DE-A1-102008 043 682
- DE-A1-102011 053 509

## Beschreibung

Die Erfindung betrifft ein Verfahren zur Beschichtung von Oberflächen, eine entsprechende Beschichtung sowie die Verwendung der nach diesem Verfahren beschichteten Gegenstände. Es existieren zahlreiche Methoden, um auf insbesondere metallischen Oberflächen mittels Tauchverfahren homogene Beschichtungen zu erzeugen. Hierbei benutzt man für die Erzeugung von insbesondere Korrosionschutzbeschichtungen vorwiegend bestehend aus einer organischen Matrix oder/und organischen oder/und anorganischen Zusatzkomponenten vorzugsweise folgende Techniken.

Die klassischen Verfahren beruhen auf der Nutzung der rheologischen Eigenschaften der verwendeten Formulierungen, um eine vollständige Beschichtung eines gefügten Werkstückes zu erzielen. Obwohl durch kontinuierliches Rotieren des betreffenden Werkstückes nach dem Tauchvorgang eine Ansammlung von Beschichtungsmaterial an kritischen Stellen reduziert werden kann, ist es mit dieser Methode nicht möglich eine vollständig homogene Beschichtung zu erzielen. Zusätzlich können bei Stellen mit höheren Beschichtungsanteilen während des Trocknungs- oder/und Vernetzungsvorgangs Fehlstellen wie Blasenbildung und Kocher entstehen, die die Qualität der gesamten Beschichtung beeinträchtigen.

Die elektrophoretischen Verfahren vermeiden diese Problematik, indem elektrischer Strom eingesetzt wird, um eine gleichmäßige Beschichtung im Tauchen abzuscheiden. Mit dieser Methode gelingt die Erzeugung von homogenen Beschichtungen auf metallischen Werkstücken. Die abgeschiedenen Beschichtungen zeigen eine ausgesprochen gute Haftung im nassen Zustand zum metallischen Untergrund, was erlaubt ohne Ablösung der Beschichtung das Werkstück in einem nachfolgenden Spülschritt zu behandeln. Dies führt dazu, dass die vorab genannten schwer zugänglichen Stellen am Werkstück von überstehender Lackierlösung befreit werden und somit keine Fehlstellen während des Trocknungsvorgangs entstehen können. Diese Technik hat den Nachteil, dass neben der notwendigen Menge an elektrischer Energie und neben geeigneten Tauchbecken, die zu einer Erhöhung der Kosten führen, auch sogenannte Kantenfluchten auftreten, da elektrische Felder an makroskopischen Kanten inhomogen aufgebaut werden und die Kanten ungleichmäßig und eventuell auch unvollständig beschichtet werden. Bei dem Aufbau der Werkstücke müssen zudem Hohlräume vermieden werden, da an diesen Stellen ein Effekt vergleichbar mit dem Phänomen des Faraday'schen Käfigs auftritt. Aufgrund der Reduktion der zum Abscheiden notwendigen elektrischen Feldstärken kann an solchen Bereichen am Werkstück keine oder nur eine stark verringerte Beschichtung durch das Verfahren aufgebracht werden (Umgriffsproblematik), was zu einer Beeinträchtigung der Beschichtungsqualität führt. Zusätzlich weist diese Technik bei einer elektrischen Tauchlackierung (ETL) wie z.B. bei der kathodischen Tauchlackierung (KTL) die folgenden Nachteile auf: Ein entsprechendes Tauchbad ist zusammen mit allen elektrischen und mechanischen Einrichtungen von der Temperaturführung, Stromversorgung und elektrischen Isolierung, Umwälzeinrichtung und Zugabeeinrichtung bis zur Entsorgung der Anolyt-Säure, die bei der elektrolytischen Beschichtung entsteht, und mit einer Ultrafiltration zur Lackrezyklierung sowie Steuereinrichtungen sehr aufwendig aufgebaut. Die Prozessführung erfordert einen sehr hohen technischen Aufwand auch aufgrund der großen Stromstärken und Energiemengen sowie bei der Vergleichmäßigung der elektrischen Parameter über das Badvolumen und bei der präzisen Einstellung aller Prozessparameter sowie bei der Wartung und Säuberung der Anlage.

Die bekannten autophoretischen Verfahren beruhen auf einem stromlosen Konzept bestehend aus einem Beizangriff der eingesetzten Substratoberfläche, bei der Metallionen aus der Oberfläche herausgelöst werden und aufgrund der Konzentration an metallischen Ionen an der entstehenden Grenzfläche eine Emulsion koaguliert. Obwohl diese Verfahren nicht oben genannter Einschränkung der elektrolytischen Verfahren bezüglich dem Faraday'schen Käfigeffektes aufweisen, müssen die bei dem Prozess entstandenen Beschichtungen nach dem ersten Aktivierungsschritt in einem aufwendigen mehrstufigen Tauchverfahren fixiert werden. Desweiteren führt der Beizangriff zu einer unvermeidbaren Verunreinigung der aktiven Zone durch Metallionen, die aus den Zonen entfernt werden müssen. Zudem beruht die Methode auf einem chemischen Abscheidungsprozess, der nicht selbstregulierend ist und bei Bedarf nicht abgebrochen werden kann, wie z. B. durch das Ausschalten des elektrischen Stromes bei den elektrolytischen Verfahren. Somit ist bei einer längeren Verweildauer der metallischen Substrate in den aktiven Zonen die Ausbildung einer zu hohen Schichtstärke unvermeidbar.

Aus dem Dokument DE 10 2008 043682 A1 ist ein Verfahren zum stromlosen Beschichten von metallischen Oberflächen bekannt, bei dem die Oberflächen zuerst mit einem Aktivierungsmittel beschichtet werden, welches Ladungen ausbildet und anschließend eine Beschichtung mit einer zur Filmbildung geeigneten Polymerdispersion erfolgt, die eine gegenüber der Ladung der Aktivierungsschicht entgegen gesetzte Ladung besitzt.

Das Dokument DE 10 2007 011553 A1 beschreibt ein Verfahren zur Beschichtung von metallischen Oberflächen mit einer wässrigen, Polymere enthaltenden Zusammensetzung sowie solche Zusammensetzungen, die als Hauptbestandteil mindestens ein wasserlösliches oder wasserdispergierendes Kunstharz sowie weitere für eine Filmbildung notwendige oder diese verbessernde Zusätze aufweist. Die Abscheidung der Zusammensetzung erfolgt als Autophorese.

Weiterhin ist aus dem Dokument DE 10 2011 053509 A1 ein weiteres Verfahren zum stromlosen Beschichten von metallischen Oberflächen bekannt, bei dem die Oberflächen zuerst mit einem Aktivierungsmittel beschichtet werden, welches als Aktivierungsmittel einen kationischen Polyelektrolyten oder dessen Salz aufweist. Zur Beschichtung mit einer wässrige, Polymere enthaltenden Zusammensetzung werden anschließend anionisch, zwitterionisch, sterisch oder katonisch stabilisierte Polymerdispersionen eingesetzt.

Dem Dokument WO 2011/023587 A2 sind Polyelektrolytkomplexe zur Herstellung von Polymerfolien mit Sauerstoffbarriereeigenschaften zu entnehmen. Diese Polyelektrolytkomplexe enthalten ein durch Wasser-in-Wasser Emulsionspolymerisation hergestellte, dispergierte Polyelektrolyte in wässriger Dispersion oder ein aus einem anionischen Polymer und einem kationischen Tensid hergestellten Polyelektrolytkomplex.

Aus dem Dokument WO 00/01783 A2 sind außerdem wässrige Klebemitteldispersionen bekannt, die neben einem klebefähigen Polymer in dispergierter Form noch einen anionischen oder kationischen Polyelektrolyten sowie gegebenenfalls ein Polyalkylenglykol enthalten. Diese Dispersionen werden als Klebstoffe zur Herstellung von mehrlagigen Papier eingesetzt.

Es ist ein lange verfolgter Wunsch, homogene Beschichtungen in einem Tauchprozess effizient und kostengünstig auszubilden, um hieraus möglichst geschlossene und im Wesentlichen ebene Beschichtungen in größerer Dicke herzustellen.

Es besteht daher die Aufgabe, ein Verfahren vorzuschlagen, mit dem über ein flüssiges System und bei Bedarf auch spülresistent auf metallischen Oberflächen homogen, flächendeckend auf einfache Weise eine Lackformulierung abgeschieden werden kann. Es bestand ferner die Aufgabe, ein möglichst einfaches Verfahren hierfür vorzuschlagen.

Die Aufgabe wird gelöst mit einem Verfahren zum Beschichten von metallischen Oberflächen von Substraten umfassend die Schritte oder bestehend aus den Schritten:
I. Bereitstellen eines Substrats mit einer gereinigten, metallischen Oberfläche,
II. Kontaktieren und Beschichten metallischen Oberflächen mit einer wässerigen Zusammensetzung in Form Dispersion oder/und Suspension,
III. gegebenenfalls Spülen der organischen Beschichtung und
IV. Trocknen oder/und Einbrennen der organischen Beschichtung oder
V. gegebenenfalls Trocknen der organischen Beschichtung und Beschichten mit einer gleichartigen oder weiteren Beschichtungszusammensetzung vor einem Trocknen oder/und Einbrennen,
wobei in Schritt II die Beschichtung mit einer wässerigen Zusammensetzung in Form Dispersion oder/und Suspension erfolgt, wobei einer Dispersion aus filmbildenden Polymeren und/oder einer Suspension aus filmbildenden anorganischen Partikeln mit einem Feststoffgehalt von 2 bis 40 Gew.-% und einer mittleren Partikelgröße von 10 bis 1000 nm mindestens ein anionischer Polyelektrolyt in einer Menge von 0,01 bis 5,0 Gew.-% bezogen auf die gesamte Masse des resultierenden Gemisches zugesetzt wird, wobei die wässerige Zusammensetzung einen pH-Wert im Bereich von 4 bis 11 aufweist und eine Beschichtung auf Basis eines ionogenen Gels ausbildet, welches aus der metallischen Oberfläche herausgelösten Kationen bindet, wobei diese Kationen aus einer Vorbehandlungsstufe oder/und aus der Kontaktierung im Schritt II stammen.

Die erfindungsgemäße Beschichtung zeigt einen einschichtigen Aufbau, wobei entweder eine mehr oder weniger homogene Beschichtung oder eine Beschichtung ausgebildet wird bzw. vorliegen kann, bei der die Partikel sich nahe der metallischen Oberfläche etwas stärker anreichern.

Unter den zu beschichtenden Substrate mit metallischer Oberfläche werden erfindungsgemäß verstanden: Metalle, metallisch beschichtete Oberflächen oder mit Primern vorbehandelte Metalloberflächen, aus denen Metallkationen noch herausgelöst werden können. Insbesondere umfasst der Begriff "zu beschichtende Oberfläche(n)" im Sinne dieser Anmeldung Oberflächen von metallischen Gegenständen oder/und metallischen Partikeln, die gegebenenfalls z.B. mit einer metallischen Beschichtung wie z.B. auf Basis von Zink oder Zinklegierung oder/und mit mindestens einer Beschichtung einer Vorbehandlungs- oder Behandlungszusammensetzung wie z.B. auf Basis von Chromat, Cr³⁺, Ti-Verbindung, Zr-Verbindung, Silan/Silanol/Siloxan/Polysiloxan oder/und organisches Polymer vorbeschichtet sein können.

Unter den metallischen Werkstoffen sind grundsätzlich alle Arten von metallischen Werkstoffen möglich, insbesondere solche aus Aluminium, Eisen, Kupfer, Titan, Zink, Zinn oder/und Legierungen mit einem Gehalt an Aluminium, Eisen, Stahl, Kupfer, Magnesium, Nickel, Titan, Zink oder/und Zinn, wobei deren Einsatz auch benachbart oder/und nacheinander erfolgen kann. Die Werkstoffoberflächen können gegebenenfalls auch vorbeschichtet werden oder/und sein, beispielsweise mit Zink oder einer Aluminium oder/und Zink enthaltenden Legierung.

Als zu beschichtende Gegenstände können grundsätzlich alle Arten von Gegenständen eingesetzt werden, die aus einem metallischen Werkstoff bestehen oder mit mindestens einer metallischen Beschichtung versehen sind. Besonders bevorzugte Gegenstände sind insbesondere Bänder (Coils), Bleche, Teile wie z.B. Kleinteile, gefügte Komponenten, kompliziert geformte Komponenten, Profile, Stäbe oder/und Drähte.

Der Begriff "stromloses Beschichten" im Sinne dieser Anmeldung bedeutet, dass beim Beschichten mit der Lösung oder/und Dispersion (= Suspension oder/und Emulsion) enthaltenden Zusammensetzung im Gegensatz zu den bekannten elektrolytischen Verfahren zur Herstellung der Folgebeschichtung von außen eine elektrische Spannung kleiner 100 V angelegt wird.

Vorzugsweise betrifft die Erfindung ein Verfahren, bei dem der anionische Polyelektrolyt **a**) mindestens ein Polysacchariden auf Basis von Glykogenen, Amylosen, Amylopektinen, Callosen, Agar, Alginen, Alginaten, Pektinen, Carrageenen, Cellulosen, Chitinen, Chitosanen, Curdlanen, Dextranen, Fruktanen, Kollagenen, Gellan Gum, Gummi Arabicum, Stärken, Xanthanen, Traganth, Karayanen, Tarakernmehlen und Glucomannanen; **b**) mindestens ein anionischen Polyelektrolyten natürlichen Ursprungs auf Basis von Polyaminosäuren, Kollagenen, Polypeptiden, Ligninen und/oder **c**) mindestens ein synthetischen anionischen Polyelektrolyten auf Basis von Polyaminosäuren, Polyacrylsäuren, Polyacrylsäuren-Copolymere, Acrylamid-Copolymere, Ligninen, Polyvinylsulfonsäure, Polycarbonsäuren, Polyphosphorsäuren oder Polystyrolen enthält oder daraus besteht.

Vorzugsweise ist das erfindungsgemäße Verfahren eines, bei dem die wässerige Zusammensetzung oder/und die hieraus hergestellte organische Beschichtung mindestens eine Art von Kationen enthält, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Al, B, Ba, Ca, Cr, Co, Cu, Fe, Hf, In, K, Li, Mg, Mn, Mo, Na, Nb, Ni, Pb, Sn, Ta, Ti, V, W, Zn oder/und Zr.

Der Begriff "Copolymere" im Sinne dieser Anmeldung beschreibt Polymere, die aus zwei oder mehr verschiedenartigen Monomereinheiten zusammengesetzt sind. Hierbei können Copolymere in fünf Klassen unterteilt werden, wie anhand eines binären Copolymers, das aus zwei verschiedenen Comonomeren A und B aufgebaut ist, veranschaulicht wird:
1. Statistische Copolymere, in denen die Verteilung der beiden Monomeren in der Kette zufällig ist (AABABBBABAABBBABBABAB....);
2. Gradient-Copolymere, prinzipiell den statistischen Copolymeren ähnlich, jedoch mit veränderlichem Anteil eines Monomers im Verlauf der Kette (AAAAAABAABBAABABBBAABBBBBB);
3. Alternierende oder abwechselnde Copolymere mit einer regelmäßigen Anordnung der Monomeren entlang der Kette (ABABABABABABABABABAB....);
4. Blockcopolymere, die aus längeren Sequenzen oder Blöcken jedes Monomers besteht (AAAAAAAAABBBBBBBBBBBB...), wobei je nach Anzahl der Blöcke man auch von Diblock-, Triblock-, Multiblock-Copolymeren spricht;
5. Pfropfcopolymere, bei denen Blöcke eines Monomers auf das Gerüst (Rückgrat) eines anderen Monomers aufgepfropft sind.

Der Begriff "Derivate" im Sinne dieser Anmeldung bezeichnet einen abgeleiteten Stoff ähnlicher Struktur zu einer entsprechenden Grundsubstanz. Derivate sind Stoffe, deren Moleküle an Stelle eines H-Atoms oder einer funktionellen Gruppe ein anderes Atom oder eine andere Atomgruppe besitzen bzw. bei denen ein oder mehrere Atome/Atomgruppen entfernt wurden.

Der Begriff "Polymer(e)" im Sinne dieser Anmeldung bedeutet Monomer(e), Oligomer(e), Polymer(e), Copolymer(e), Blockcopolymer(e), Pfropfcopolymer(e), deren Gemische und deren Compoundierungen auf organischer oder/und im Wesentlichen organischer Basis. Üblicherweise liegt/liegen die "Polymer(e)" im Sinne dieser Anmeldung vorwiegend oder gänzlich als Polymer(e) oder/und Copolymer(e) vor.

Besonders bevorzugt ist das erfindungsgemäße Verfahren eines, bei dem die wässerige Zusammensetzung oder/und die hieraus hergestellte organische Beschichtung einen Gehalt an organischen Partikeln auf Basis von Polyacrylaten, Polyurethanen, Polyepoxiden und/oder deren Hybriden aufweist.
Sogenannte Polyacrylat-Polyurethan Hybridharze können vom Typ unterschieden werden in Hybridsysteme, die durch reines Vermischen der verschiedenen Dispersionen erzeugt werden (Blends oder Formulierungen), in solche, die eine chemische Verbindung zwischen den unterschiedlichen Polymerarten aufweisen und in solche, in denen die unterschiedlichen Polymerklassen interpenetrierende Netzwerke (IPN) ausbilden.
Üblicherweise werden solche Polyurethan-Polyacrylat-Hybriddispersionen durch Emulsionspolymerisation eines Vinylolymerisats ("Polyacrylat") in einer wässrigen Polyurethandispersion hergestellt. Es ist aber auch möglich, die Polyurethan-Polyacrylat-Hybriddispersion als Sekundärdispersion herzustellen.
Wässrige Polyacrylat-Polyepoxid Hybriddispersionen werden üblicherweise durch Additionsreaktionen eines bifunktionellen Epoxids mit bifunktionellen Aminmonomerbausteinen und anschließender Reaktion mit einem Polyacrylat mit ausreichenden Carboxylfunktionen hergestellt. Die Wasserdispergierbarkeit kann wie bei den Polyurethansekundärdispersionen dabei z.B. durch Carboxylatgruppen, die mit Aminen in anionische Gruppen überführt wurden und anschließender Dispergierung in Wasser erzielt werden.
Hybriddispersionen zur Ausbildung einer Schicht auf dem Substrat können neben Polyurethan- und Polyepoxid-Bestandteilen bevorzugt auch organische Polymere und/oder Copolymere auf Basis von Polyvinylalkoholen, Polyvinylacetaten Polybutylacrylaten und/oder anderen Acrylsäureester enthalten. Acrylsäureester sind Ester, die sich von der Acrylsäure (CH2=CH-COOH) ableiten und damit die funktionelle Gruppe (CH2=CH-COOR) tragen. In großen Mengen werden unter anderem Acrylsäuremethylester, Acrylsäureethylester, Acrylsäurebutylester und Ethylhexylacrylat produziert. Die Hauptanwendung von Acrylsäureestern liegt in Homo- und Copolymeren, die z. B. Acrylsäure, Acrylamiden, Methacrylaten, Acrylnitril, Fumarsäuren, Itaconsäure, Maleaten, Vinylacetat, Vinlychlorid, Styrol, Butadien und ungesättigten Polyestern, Polyepoxidestern, Polyacrylamiden, Polyacrylsäuren, Polycarbonaten, Polyestern, Polyethern, Polystyrolbutadienen, Poly(meth)acrylsäureestern, Polyinylacetatcopolymeren mit Acrylsäureestern und/oder Copolymeren mit Dibutylmaleinat und/oder mit Vinylestern von mindestens einer Koch-Säure, Polyethylenen, Polyvinylchloriden, Polyacrylnitrilen, Polyepoxiden, Polyurethanen, Polyacrylaten, Polymethacrylaten, Polyestern, Polyamiden, Polytetrafluorethylenen, Polyisobutadienen, Polyisoprenen, Silikonen, Silikonkautschuken und/oder deren Derivaten enthalten. Diese sind insbesondere zu mindestens 50 Gew.-% der Fest- und Wirkstoffe in der wässerigen Zusammensetzung enthalten.

Der Begriff "Vorbehandlung" bedeutet eine Behandlung (= Kontaktieren der zu beschichtenden Oberflächen mit einer üblicherweise flüssigen Zusammensetzung), bei der anschließend, gegebenenfalls nach einem nachfolgenden Beschichten, eine weitere Beschichtung zum Schützen der Schichtabfolge und des Gegenstandes wie z.B. mindestens ein Lack aufgebracht wird.

Bei einer vorherigen Vorbehandlung vor einer Aktivierung einer Oberfläche mit einem Aktivierungsmittel, das helfen soll, die Oberfläche elektrostatisch aufzuladen, können die zu behandelnden Oberflächen bei Bedarf zuerst alkalisch gereinigt und gegebenenfalls mit einer Zusammensetzung zur Vorbehandlung kontaktiert werden, letzteres insbesondere um eine Konversionsschicht auszubilden. Dann können die derart behandelten oder/und beschichteten Oberflächen gegebenenfalls mit einem Primer oder/und mit einer gegebenenfalls umformbaren Schutzschicht, insbesondere mit einem Korrosionsschutzprimer, beschichtet oder/und gegebenenfalls beölt werden. Die Beölung dient insbesondere dem vorübergehenden Schutz der behandelten oder/und beschichteten insbesondere metallischen Oberflächen.

Als Vorbehandlung ist grundsätzlich jede Art der Vorbehandlung möglich: Es können beispielsweise wässerige Vorbehandlungszusammensetzungen auf Basis von Phosphat, Phosphonat, Silan/Silanol/Siloxan/Polysiloxan, Lanthanidverbindung, Titanverbindung, Hafniumverbindung, Zirkoniumverbindung Säure, Metallsalz oder/und organischem Polymer eingesetzt werden.

Bei der weiteren Behandlung dieser beschichteten Substrate kann bei Bedarf unabhängig davon, ob davor Öl aufgebracht worden ist oder nicht, eine insbesondere alkalische Reinigung erfolgen.

Eine Beschichtung mit einem Korrosionsschutzprimer wie z.B. einem Schweißprimer kann zusätzlichen Korrosionsschutz insbesondere in Hohlräumen und schlecht zugänglichen Partien eines Substrats, Umformbarkeit oder/und Fügbarkeit z.B. beim Falzen, Kleben oder/und Schweißen ermöglichen. In der industriellen Praxis könnte ein Korrosionsschutzprimer insbesondere dann eingesetzt werden, wenn das damit beschichtete Substrat wie z.B. ein Blech nach der Beschichtung mit dem Korrosionsschutzprimer geformt oder/und mit einer weiteren Komponente gefügt wird und wenn weitere Beschichtungen erst danach aufgebracht werden. Wenn in diesem Verfahrensgang zusätzlich ein Korrosionsschutzprimer unter der Aktivierungsschicht und unter der Partikelbeschichtung aufgebracht wird, wird üblicherweise ein deutlich verbesserter Korrosionsschutz erzeugt.

Der Begriff "im Wesentlichen spülfest" im Sinne dieser Anmeldung bedeutet, dass unter den Bedingungen der jeweiligen Anlage und Verfahrensabfolge die jeweils letzte Beschichtung durch einen Spülvorgang (= Spülen) nicht gänzlich entfernt wird, so dass eine Beschichtung hergestellt werden kann, vorzugsweise eine geschlossene Beschichtung.

Bei dem erfindungsgemäßen Verfahren können als Partikel die unterschiedlichsten Partikelarten, Partikelgrößen und Partikelformen verwendet werden.

Als Partikel in der wässerigen Zusammensetzung zum Ausbilden der Schicht können vorzugsweise Oxide, Hydroxide, Carbonate, Phosphate, Phosphosilicate, Silicate, Sulfate, organische Polymere inklusive Copolymeren und deren Derivaten, Wachse und/oder compoundierte Partikel, insbesondere solche auf Basis von Korrosionsschutzpigmenten, organischen Polymeren, Wachsen und/oder compoundierten Partikeln, verwendet werden und/oder deren Gemische. Sie weisen vorzugsweise Partikelgrößen auf im Bereich von 5 nm bis 15 µm, von 8 nm bis 5 µm, von 12 nm bis 3 µm oder von 15 nm bis 1,5 µm, insbesondere von 20 nm bis 1 µm, von 30 nm bis 700 nm, von 40 nm bis 600 nm oder von 50 nm bis 500 nm. Sie sind vorzugsweise wasserunlösliche Partikel.

Compoundierte Partikel weisen in einem Partikel ein Gemisch von mindestens zwei verschiedenen Substanzen auf. Compoundierte Partikel können oft andere Substanzen mit sehr unterschiedlichen Eigenschaften aufweisen. Sie können beispielsweise teilweise oder gänzlich die Zusammensetzung für einen Lack enthalten, gegebenenfalls sogar mit einem Gehalt an nichtpartikulär ausgebildeten Substanzen wie z.B. Tensid, Entschäumer, Dispergiermittel, Lackhilfsmittel, weitere Arten Additive, Farbstoff, Korrosionsinhibitor, schwach wasserlöslichem Korrosionsschutzpigment oder/und andere Substanzen, die für entsprechende Mischungen üblich oder/und bekannt sind. Solche Lackbestandteile können beispielsweise für organische Beschichtungen zum Umformen, für Korrosionsschutzprimer und andere Primer, für Farblacke, Füller oder/und Klarlacke geeignet oder/und häufig genutzt sein.

Ein Korrosionsschutzprimer weist üblicherweise elektrisch leitfähige Partikel auf und ist elektrisch schweißbar. Generell ist es hierbei vielfach bevorzugt, dass a) ein Gemisch chemisch oder/und physikalisch verschiedenartiger Partikel, b) Partikel, Aggregate oder/und Agglomerate aus chemisch oder/und physikalisch verschiedenartigen Partikeln oder/und c) compoundierten Partikeln in der Zusammensetzung oder/und in der hieraus gebildeten Partikelschicht verwendet werden.

Vielfach ist es bevorzugt, dass die Partikel enthaltende Zusammensetzung oder/und die hieraus gebildete Partikelschicht neben mindestens einer Art von Partikeln auch mindestens eine nichtpartikuläre Substanz enthält/enthalten, insbesondere Additive, Farbstoffe, Korrosionsinhibitoren oder/und schwach wasserlösliche Korrosionsschutzpigmente. Es können insbesondere als Partikel in der Zusammensetzung oder/und in der hieraus gebildeten Partikelschicht farbige oder/und gegebenenfalls auch ein begrenzter Anteil an elektrisch leitfähigen Partikeln insbesondere auf Basis von Fullerenen und anderen Kohlenstoffverbindungen mit Graphit-ähnlichen Strukturen oder/und Russ, gegebenenfalls auch Nanocontainer oder/und Nanoröhren enthalten sein. Andererseits können hierbei insbesondere als Partikel in der Zusammensetzung oder/und in der hieraus gebildeten Beschichtung beschichtete Partikel, chemisch oder/und physikalisch modifizierte Partikel, Kern-Schale-Partikel, compoundierte Partikel aus verschiedenartigen Substanzen, verkapselte Partikel oder/und Nanocontainer verwendet werden.

Bei dem erfindungsgemäßen Verfahren ist es bevorzugt, dass die Partikel enthaltende Zusammensetzung, die hieraus gebildete Partikelschicht oder/und die hieraus z.B. durch Verfilmen oder/und Vernetzen gebildete Beschichtung neben mindestens einer Art von Partikeln auch jeweils mindestens einen Farbstoff, ein Farbpigment, ein Korrosionsschutzpigment, einen Korrosionsinhibitor, ein Leitfähigkeitspigment, eine weitere Art an Partikeln, ein Silan/Silanol/Siloxan/ Polysiloxan/Silazan/Polysilazan, ein Lackadditiv oder/und ein Additiv wie z.B. jeweils mindestens ein Tensid, einen Entschäumer oder/und ein Dispergiermittel, enthält/enthalten.

Bei dem erfindungsgemäßen Verfahren ist es bevorzugt, dass die Zusammensetzung oder/und die hieraus gebildete Beschichtung neben mindestens einer Art von Partikeln und gegebenenfalls neben mindestens einer nicht-partikulären Substanz teilweise oder vollständig eine chemische Zusammensetzung für einen Primer, einen Lack wie beispielsweise für einen Füller, Decklack oder/und Klarlack aufweist.

Als Zusätze zu den organischen Polymeren der Partikel empfehlen sich in vielen Ausführungsformen Pigmente oder/und Additive, wie sie in Lacken oder/und Primern häufig verwendet werden.

Eine Filmbildung lässt sich durch den Einsatz thermoplastischer Polymere oder/und durch Zusatz von Substanzen, die als temporäre Weichmacher dienen, verbessern. Filmbildungshilfsmittel wirken als spezifische Lösemittel, die die Oberfläche der Polymerteilchen erweichen und so deren Verschmelzung ermöglichen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Ferner ist es vorteilhaft, wenn auch ausreichend lange während des Trockenprozesses ein Restwassergehalt vorhanden ist.

Insbesondere vorteilhaft als Filmbildungshilfsmittel sind sogenannte langkettige Alkohole, insbesondere solche mit 4 bis 20 C-Atomen,
wie ein Butandiol,
ein Butylglykol,
ein Butyldiglykol,
ein Ethylenglykolether wie Ethylenglykolmonobutylether,
Ethylenglykolmonoethylether,
Ethylenglykolmonomethylether,
Ethylglykolpropylether,
Ethylenglykolhexylether,
Diethylenglykolmethy-lether,
Diethylenglykolethylether,
Diethylenglykolbutylether,
Diethylenglykolhexylether oder ein
Polypropylenglykolether wie
Propylenglykolmonomethylether,
Dipropylenglykol monomethylether,
Tripropylenglykolmonomethylether,
Propylenglykolmonobutylether,
Dipropylenglykolmonobutylether,
Tripropylenglykolmonobutylether,
Propylenglykolmonopropylether,
Dipropylenglykolmonopropylether,
Tripropylenglykolmonopropylether,
Propylenglykolphenylether,
Trimethylpentandioldiisobutyrat,
ein Polytetrahydrofuran,
ein Polyetherpolyol oder/und ein Polyesterpolyol.

Eine Vernetzung kann beispielsweise mit bestimmten reaktiven Gruppen wie z.B. Isocyanat-, Isocyanurat- oder/und Melamingruppen erfolgen. Vorzugsweise wird die Folgebeschichtung in einer Weise getrocknet, dass insbesondere vorhandene organische Polymerpartikel verfilmen können, so dass eine weitgehend oder vollständig homogene Beschichtung gebildet wird. Die Trockentemperaturen können dabei in manchen Ausführungsformen so hoch gewählt werden, dass die organischen polymeren Bestandteile vernetzen können.

Bei dem erfindungsgemäßen Verfahren ist es in etlichen Ausführungsformen bevorzugt, dass eine im Wesentlichen organische Partikel enthaltende Partikelschicht ausgebildet und beispielsweise beim Trocknen verfilmt oder/und vernetzt wird. Das Verfilmen erfolgt in manchen Ausführungsformen auch ohne Anwesenheit von Filmbildungshilfsmitteln. Hierbei können die Partikel der Beschichtung, insbesondere wenn sie vorwiegend oder gänzlich als organische Polymere vorliegen, vorzugsweise zu einem im Wesentlichen geschlossenen oder zu einer geschlossenen Beschichtung verfilmt werden, insbesondere beim Trocknen. Hierbei ist es oft bevorzugt, dass die Trocknungstemperatur einer Beschichtung, die vorwiegend oder gänzlich aus organischen Polymeren bestehen, so gewählt wird, dass eine im Wesentlichen geschlossene oder eine geschlossene Beschichtung gebildet wird. Bei Bedarf kann zum Verfilmen mindestens ein Filmbildungshilfsmittel zugesetzt werden, insbesondere auf Basis von mindestens einem langkettigen Alkohol. Bei Ausführungsformen mit mehreren Partikelschichten übereinander werden vorzugsweise erst alle Partikelschichten aufgebracht und danach gemeinsam verfilmt oder/und vernetzt.

Der Gehalt an mindestens einem Filmbildungshilfsmittel kann in der wässerigen Zusammensetzung - insbesondere im Bad - vorzugsweise 0,01 bis 50 g/L bezogen auf Feststoffe einschließlich Wirkstoffen, besonders bevorzugt 0,08 bis 35 g/L, ganz besonders bevorzugt 0,2 bis 25 g/L, 0,3 bis 20 g/L oder 0,5 bis 16 g/L, insbesondere 1 bis 12 g/L, 2 bis 10 g/L, 3 bis 8 g/L oder 4 bis 6 g/L betragen. Das Gewichtsverhältnis der Gehalte an organischem Filmbildner zu Gehalten an Filmbildungshilfsmitteln in der wässerigen Zusammensetzung - insbesondere im Bad - kann in weiten Bereichen schwanken; insbesondere kann es bei ≤ (100 : 0,1) liegen. Vorzugsweise liegt dieses Verhältnis im Bereich von 100 : 10 bis 100 : 0,2, von 100 : 5 bis 100 : 0,4 oder von 100 : 2,5 bis 100 : 0,6, besonders bevorzugt im Bereich von 100 : 2 bis 100 : 0,75, von 100 : 1,6 bis 100 : 0,9 oder von 100 : 1,4 bis 100 : 1.

Hierbei ist es vielfach bevorzugt, dass das Trocknen, Verfilmen oder/und Vernetzen im Temperaturbereich von 5 bis 350 °C, von 8 bis 200 °C, von 10 bis 150 °C, von 12 bis 120 °C oder von 14 bis 95 °C erfolgt, besonders bevorzugt im Temperaturbereich von 16 bis 40 °C bezogen auf die Ofentemperatur oder/und bezogen auf Peak-Metal-Temperature (PMT). Der gewählte Temperaturbereich ist weitgehend von der Art und Menge der organischen und gegebenenfalls auch der anorganischen Bestandteile und gegebenenfalls auch von ihren Filmbildungstemperaturen oder/und Vernetzungstemperaturen abhängig.

Vorzugsweise betrifft die Erfindung ein Verfahren, bei dem die wässerige Zusammensetzung oder/und die hieraus hergestellte organische Beschichtung einen Gehalt an mindestens einem Komplexbildner für Metallkationen oder einem Polymer, welches Metallkationen komplexierend modifiziert ist, aufweist.

Besonders bevorzugt ist das erfindungsgemäße Verfahren eines, bei dem die wässerige Zusammensetzung oder/und die hieraus hergestellte organische Beschichtung einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweist.

Vorteilhafter Weise weist die wässerige Zusammensetzung oder/und die hieraus hergestellte organische Beschichtung einen Gehalt an mindestens einem Emulgator auf.

Besonders bevorzugt ist, dass die wässerige Zusammensetzung oder/und die hieraus hergestellte organische Beschichtung einen Gehalt an mindestens einem Emulgator ausgewählt aus solchen auf Basis von anionischen Emulgatoren aufweist.

Vorzugsweise enthält die wässerige Zusammensetzung oder/und die hieraus hergestellte organische Beschichtung ein Gemisch aus mindestens zwei verschiedenen anionischen Polyelektrolyten.

Besonders bevorzugt enthält die wässerige Zusammensetzung oder/und die hieraus hergestellte organische Beschichtung ein Gemisch aus zwei Pektinen.

Weiterhin bevorzugt enthält die wässerige Zusammensetzung oder/und die hieraus hergestellte organische Beschichtung mindestens ein anionisches Polysaccharid ausgewählt aus solchen mit einem Veresterungsgrad der Carboxyfunktion im Bereich von 5 bis 75 % bezogen auf die Gesamtzahl der Alkohol- und Carboxygruppen.

Ganz besonders bevorzugt enthält die wässerige Zusammensetzung oder/und die hieraus hergestellte organische Beschichtung mindestens ein anionisches Polysaccharid oder/und mindestens einen anionischen Polyelektrolyten ausgewählt aus solchen, mit einem Molekulargewicht im Bereich von 500 bis 1000000 g/mol⁻¹.

Vorzugsweise enthält die wässerige Zusammensetzung oder/und die hieraus hergestellte organische Beschichtung mindestens ein anionisches Polysaccharid oder/und mindestens einen anionischen Polyelektrolyten ausgewählt aus solchen mit einem Amidierungsgrad der Carboxyfunktionen im Bereich von 1 bis 50 %, einem Epoxidierungsgrad der Carboxyfunktionen von bis zu 80 %.

Besonders bevorzugt ist in dem erfindungsgemäßen Verfahren, dass die anionischen Polyelektrolyte modifiziert werden oder modifiziert sind mit Haftung vermittelnden Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

Vorteilhafter Weise werden als Kationen, die aus der metallischen Oberfläche herausgelöst werden/sind oder/und die der wässerigen Zusammensetzung zugesetzt werden/sind, Al, Cu, Fe oder/und Zn ausgewählt.

Besonders bevorzugt enthält die wässerige Zusammensetzung oder/und die hieraus hergestellte organische Beschichtung mindestens ein Additiv ausgewählt aus Additiven bestehend aus der Gruppe von Bioziden, Dispergierhilfsmitteln, Filmbildungshilfmitteln, saure oder/und basische Hilfsmittel zum Einstellen des pH-Werts und Verdicker und Verlaufsmittel.

Ganz besonders bevorzugt werden vor dem Kontaktieren und Beschichten der metallischen Oberflächen mit einer wässerigen Zusammensetzung in Verfahrensstufe II. die metallischen Oberflächen gereinigt, gebeizt oder/und vorbehandelt.

Vorteilhafter Weise bildet die wässerige Zusammensetzung eine Beschichtung auf Basis eines ionogenen Gels aus, bei dem der dabei oder später ausgebildete Trockenfilm eine Dicke von mindestens 1 µm aufweist.

Besonders bevorzugt wird die organische Beschichtung in 0,05 bis 20 Minuten im Tauchbad ausgebildet und weist nach dem Trocknen eine Trockenfilmdicke im Bereich von 5 bis 100 µm auf.

Die Erfindung betrifft weiterhin eine wässerige Zusammensetzung, die in einer Dispersion aus filmbildenden Polymeren und/oder einer Suspension von filmbildenden anorganischen Partikeln mit einem Feststoffgehalt von 2 bis 40 Gew.-% und einer mittleren Partikelgröße von 10 bis 1000 nm mindestens einen anionischen Polyelektrolyten in einer Menge von 0,01 bis 5,0 Gew.-% bezogen auf die gesamte Masse des resultierenden Gemisches enthält, wobei die wässerige Zusammensetzung einen pH-Wert im Bereich von 4 bis 11 aufweist.

Vorzugsweise ist die wässrige Zusammensetzung eine die in der Dispersion aus filmbildenden Polymeren einen Gehalt an organischen Partikeln auf Basis von Polyacrylaten, Polyurethanen, Polyepoxiden und/oder deren Hybriden, einen Gehalt an mindestens einem Komplexbildner ausgewählt aus solchen auf Basis von Maleinsäure, Alendronsäure, Itaconsäure, Citraconsäure oder Mesaconsäure oder Anhydriden oder Halbestern dieser Carbonsäuren und mindestens einen anionischen Polyelektrolyten auf Basis von Pektinen oder Gellan Gum aufweist.

Es hat sich gezeigt, dass aus den erfindungsgemäß beschichteten Oberflächen anschließend im Wesentlichen geschlossene oder geschlossene Beschichtungen mit einer Schichtdicke im Bereich von 5 nm bis 50 µm hergestellt werden können, insbesondere im Bereich von 15 nm bis 40 µm, von 25 nm bis 30 µm, von 45 nm bis 20 µm, von 60 nm bis 15 µm, von 80 nm bis 10 µm, von 100 nm bis 8 µm, von 130 nm bis 6 µm, von 160 nm bis 4 µm, von 200 nm bis 2 µm oder von 400 nm bis 1 µm. Entsprechende Schichtdicken können die einzelnen Beschichtungen vor oder/und nach ihrer Verfilmung oder/und vor ihrer Vernetzung aufweisen.

Es hat sich gezeigt, dass die erfindungsgemäß beschichteten Oberflächen, aus denen anschließend im Wesentlichen geschlossene oder geschlossene Beschichtungen hergestellt wurden, auf deutlich einfachere und deutlich kostengünstigere Weise hergestellt werden konnten als beispielsweise Elektrotauchlack-, autophoretischen Tauchlack- oder Pulverlackbeschichtungen.

Ferner hat es sich gezeigt, dass derartige erfindungsgemäß hergestellte Beschichtungen Elektrotauchlack-, autophoretischen Tauchlack- oder Pulverlackbeschichtungen der heutigen industriellen Praxis in ihren Eigenschaften gleichwertig sein können, wenn entsprechend chemisch zusammengesetzte, insbesondere Formulierungen eingesetzt werden.

Es wurde überraschend festgestellt, dass das erfindungsgemäße Verfahren, das kein oder im Wesentlichen kein elektrolytisches Verfahren ist, auch in dem Fall, dass es mit elektrischer Spannung geringfügig unterstützt wird, und es daher üblicherweise kein Anlegen einer äußeren elektrischen Spannung bedarf, in einfacher Weise und ohne aufwendige Steuerung betrieben werden kann. Dieses Verfahren kann in einem weiten Temperaturbereich und auch bei Raumtemperatur eingesetzt werden, wenn von der nachfolgenden Trocknung abgesehen wird.

Es wurde überraschend festgestellt, dass bei dem erfindungsgemäßen Verfahren bezüglich der Aufbringung des Aktivierungsmittels keine aufwendigen Steuerungsmaßnahmen erforderlich sind, um eine gleichmäßige und homogene Beschichtung zu erzielen, und dass bei geringem Chemikalienverbrauch hochwertige schützende Folgebeschichtungen gebildet werden, die eine Dicke im Bereich von 500 nm bis 30 µm erreichen.

Es wurde überraschend festgestellt, dass es sich bei dem erfindungsgemäßen Verfahren bezüglich der Abscheidung insbesondere der Folgebeschichtung um ein selbstregulierendes Verfahren handelt, bei dem keine aufwendigen Steuermaßnahmen erforderlich sind und bei geringem Chemikalienverbrauch hochwertige schützende Beschichtungen gebildet werden.

Es wurde überraschend festgestellt, dass die erfindungsgemäß abgeschiedenen Folgebeschichtungen eine homogene Schicht mit einer gleichmäßigen Trockenschichtdicke auf einem komplex geformten Werkstück ausbildeten, vergleichbar mit der Qualität einer herkömmlich elektrophoretisch oder autophoretisch abgeschiedenen Lackschicht.

Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder. Besonders bevorzugt wird sie im Automobilbau, im Bauwesen, für den Gerätebau, für Haushaltsgeräte oder im Heizungsbau eingesetzt. Die Verwendung des erfindungsgemäßen Verfahrens ist besonders bevorzugt zur Beschichtung von Substraten, die Probleme bei der Beschichtung mit einem Elektrotauchlack bereitet haben.

Die Erfindung wird nachfolgen an Hand von 16 Ausführungsbeispielen und 2 Vergleichsbeispielen näher erläutert. Dabei wurden als Substrate in Schritt I eingesetzt:
1: Elektrolytisch verzinktes Stahlblech mit einer Zink-Schichtauflage von 5µm, Blechdicke 0,81 mm;
2: Kaltgewalzter Stahl, Blechdicke ca. 0,8 mm:
3: Aluminiumlegierung der Güteklasse AC 170, Blechdicke ca. 1,0 mm und folgende generellen Behandlungsschritte durchgeführt:

### II. Alkalische Reinigung:

30 g/L Gardoclean® S 5176 und 4 g/L Gardobond® Additiv H 7406 der Chemetall GmbH in Stadtwasser angesetzt. Die Bleche wurden 180 s im Spritzen bei 60 °C gereinigt und anschließend 120 s mit Stadtwasser und 120 s mit deionisiertem Wasser im Tauchen gespült.

### III. Beschichtung der Oberflächen mit erfindungsgemäßen Dispersionen für die Ausbildung der organischen Beschichtung:

### Zusammensetzung der Dispersion

| **DPE-Dispersion mit Maleinsäure** | |
|---|---|
| nfAt_{heoretisch}=40% | nfA_{praktisch}=39% |
| Chemikalie | [g] |
| Stufe 1 | |
| H₂O | 770 |
| NH₃ (25%) | 6,24 |
| MS | 5,06 |
| DPE | 2,0531 |
| MMA | 25,05 |
| APS | 3,12 |
| H₂O | 67,6 |

| Stufe 2 | |
|---|---|
| BMA | 500 |
| HEMA | 25 |

### Abkürzungsverzeichnis:

- NH₃: Ammoniaklösung (25%)
- AS:: Acrylsäure
- DPE:: Diphenylethylen
- MMA:: Methylmethacrylat
- APS:: Ammoniumperoxodisulfat
- BMA:: Butylmethacrylat
- HEMA:: Hydroxyethylmethacrylat
- MS:: Maleinsäure
- VTES:: Vinyltriethoxysilan
- nfA:: nichtflüchtiger Anteil resp. Festkörpergehalt

Es wurde für die beiden Vergleichsbeispiele ausschließlich obige Dispersion ohne Zugabe der für den erfindungsgemäßen Gebrauch in Frage kommenden Polyelektrolyte verwendet. Die Mischung wurde falls notwendig vor Benutzung mit Säure, vorzugsweise Salpeter- und/oder Phosphorsäure auf einen pH von 4 eingestellt.

### IV: Spülen der organischen Beschichtung:

Das Spülen nach der organischen Beschichtung dient dazu, um nicht haftende Bestandteile der Formulierung und Anhäufungen der Formulierung zu entfernen und den Verfahrensgang wie in der Automobilindustrie üblich so realitätsnah wie möglich zu gestalten. Denn in der Automobilindustrie erfolgt das Spülen mit Wasser üblicherweise entweder durch ein Tauchspülen oder ein Spritzspülen.

### V: Trocknen oder/und Vernetzen der Beschichtung:

Trocknung oder Trocknung unter Verfilmung insbesondere der organischen polymeren Bestandteile:
175 °C für 15 Minuten

Parallele Untersuchungen mit Wirbelstrom-Messgerät und Rasterelektronenmikroskopie (REM) verdeutlichten, dass erfindungsgemäß Beschichtungen ausgebildet wurden, aus denen weitgehend geschlossene oder geschlossene Beschichtungen durch Kontaktieren der Oberflächen mit Dispersionen oder/und Formulierungen gebildet werden konnten.

### Beispiel 1

Substrat 1 wurde mit einer Mischung der vorstehend beschriebenen Dispersion und 0,5 % Gew.-% bezogen auf die gesamte Menge des resultierenden Gemisches mit einem Pektin mit einem Molekulargewicht von ungefähr 70'000 g/mol, einem Amidierungsgrad von 0 %, einem Veresterungsgrad von 52 %, einem Epoxydierungsgrad von 0 %, einem Galakturonsäuregehalt von 87 % mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 5 µm gemessen mit einem Wirbelstrom-Messgerät und REM ermittelt.

### Beispiel 2

Versuch 1 wurde mit Substrat 2 wiederholt und eine Trockenfilmdicke von 1 µm mit REM ermittelt.

### Beispiel 3

Substrat 1 wurde mit einer Mischung der vorstehend beschriebenen Dispersion und 0,5 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 38 %, einem Epoxydierungsgrad von 0 %, einem Galakturonsäuregehalt von 85 % mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 12 µm gemessen mit einem Wirbelstrom-Messgerät und REM ermittelt.

### Beispiel 4

Versuch 3 wurde mit Substrat 2 wiederholt und eine Trockenfilmdicke von 3 µm mit REM ermittelt.

### Beispiel 5

Substrat 1 wurde mit einer Mischung der vorstehend beschriebenen Dispersion und 0,5 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 10 µm gemessen mit einem Wirbelstrom-Messgerät und REM ermittelt.

### Beispiel 6

Versuch 5 wurde mit Substrat 2 wiederholt und eine Trockenfilmdicke von 2 µm mit REM ermittelt.

### Beispiel 7

Substrat 1 wurde mit einer Mischung der vorstehend beschriebenen Dispersion und 0,25 % Gew.-% bezogen auf die gesamte Menge des resultierenden Gemisches ein Pektin mit einem Molekulargewicht von ungefähr 70'000 g/mol, einem Amidierungsgrad von 11 %, einem Veresterungsgrad von 41 %, einem Epoxydierungsgrad von 0 %, einem Galakturonsäuregehalt von 88 % mit 99,5 Gew.-% und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 52 %, einem Epoxydierungsgrad von 0 %, einem Galakturonsäuregehalt von 87 % mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 50 µm gemessen mit einem Wirbelstrom-Messgerät und REM ermittelt.

### Beispiel 8

Substrat 1 wurde mit einer Mischung der vorstehend beschriebenen Dispersion und 0,25 % Gew.-% bezogen auf die gesamte Menge des resultierenden Gemisches ein Pektin mit einem Molekulargewicht von ungefähr 70'000 g/mol, einem Amidierungsgrad von 11 %, einem Veresterungsgrad von 41 %, einem Epoxydierungsgrad von 0 %, einem Galakturonsäuregehalt von 88 % mit 99,5 Gew.-% und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 38 %, einem Epoxydierungsgrad von 0 %, einem Galakturonsäuregehalt von 85 % mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 23 µm gemessen mit einem Wirbelstrom-Messgerät und REM ermittelt.

### Beispiel 9

Substrat 1 wurde mit einer Mischung der vorstehend beschriebenen Dispersion und 0,25 % Gew.-% bezogen auf die gesamte Menge des resultierenden Gemisches ein Pektin mit einem Molekulargewicht von ungefähr 70'000 g/mol, einem Amidierungsgrad von 23 %, einem Veresterungsgrad von 29 %, einem Epoxydierungsgrad von 0 %, einem Galakturonsäuregehalt von 89 % mit 99,5 Gew.-% und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 72 %, einem Epoxydierungsgrad von 0 %, einem Galakturonsäuregehalt von 83 % mit 99,5 Gew.-% mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 22 µm gemessen mit einem Wirbelstrom-Messgerät und REM ermittelt.

### Beispiel 10

Substrat 1 wurde mit einer Mischung der vorstehend beschriebenen Dispersion und 0,25 % Gew.-% bezogen auf die gesamte Menge des resultierenden Gemisches ein Pektin mit einem Molekulargewicht von ungefähr 70'000 g/mol, einem Amidierungsgrad von 23 %, einem Veresterungsgrad von 29 %, einem Epoxydierungsgrad von 0 %, einem Galakturonsäuregehalt von 89 % mit 99,5 Gew.-% und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 27 µm gemessen mit einem Wirbelstrom-Messgerät und REM ermittelt.

### Beispiel 11

Versuch 10 wurde mit Substrat 2 wiederholt und eine Trockenfilmdicke von 2 µm mit REM ermittelt.

### Beispiel 12

Substrat 1 wurde mit einer Mischung der vorstehend beschriebenen Dispersion und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 52 %, einem Epoxydierungsgrad von 0 %, einem Galakturonsäuregehalt von 87 % und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion gemischt. Die Mischung wurde falls notwendig vor Benutzung mit Säure, vorzugsweise Salpeter-und/oder Phosphorsäure auf einen pH von 4 eingestellt. Es wurde eine Trockenfilmdicke von 40 µm gemessen mit einem Wirbelstrom-Messgerät und REM ermittelt.

### Beispiel 13

Versuch 12 wurde mit Substrat 2 wiederholt und eine Trockenfilmdicke von 10 µm mit REM ermittelt.

### Beispiel 14

Substrat 1 wurde mit einer Mischung der vorstehend beschriebenen Dispersion und 0,5 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 38 %, einem Epoxydierungsgrad von 0 %, einem Galakturonsäuregehalt von 85 % und 0,25 % Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion gemischt. Die Mischung wurde falls notwendig vor Benutzung mit Säure, vorzugsweise Salpeter-und/oder Phosphorsäure auf einen pH von 4 eingestellt. Es wurde eine Trockenfilmdicke von 30 µm gemessen mit einem Wirbelstrom-Messgerät und REM ermittelt.

### Beispiel 15

Versuch 14 wurde mit Substrat 2 wiederholt und eine Trockenfilmdicke von 10 µm mit REM ermittelt.

### Beispiel 16

Substrat 3 wurde mit einer Mischung der vorstehend beschriebenen Dispersion und 0,5 % Gew.-% bezogen auf die gesamte Menge des resultierenden Gemisches ein Gellan Gum mit einem Molekulargewicht von ungefähr 70'000 g/mol, einem geringen Acylgehalt mit 99,5 Gew.-% obiger Dispersion gemischt. Die Mischung wurde falls notwendig vor Benutzung mit Säure, vorzugsweise Salpeter- und/oder Phosphorsäure auf einen pH von 4 eingestellt. Es wurde eine Trockenfilmdicke von 4 µm gemessen mit einem Wirbelstrom-Messgerät und REM ermittelt.

### Vergleichsbeispiel 1

Substrat 1 wurde mit obiger Dispersion beschichtet. Es wurde eine Trockenfilmstärke von 300 nm bis 500 nm mit REM ermittelt.

### Vergleichsbeispiel 2

Substrat 2 wurde mit obiger Dispersion beschichtet. Es wurde eine Trockenfilmstärke von 300 nm bis 500 nm mit REM ermittelt.

Die mikroskopischen Aufnahmen zeigen durchweg eine homogene Schichtbildung, was auf ein verlässliches, selbst regulierendes und gut kontrollierbares Beschichtungsverfahren hinweist.

## Patentansprüche

1. Verfahren zum Beschichten von metallischen Oberflächen von Substraten umfassend die Schritte oder bestehend aus den Schritten:
I. Bereitstellen eines Substrats mit einer gereinigten, metallischen Oberfläche,
II. Kontaktieren und Beschichten metallischen Oberflächen mit einer wässerigen Zusammensetzung in Form Dispersion oder/und Suspension,
VI. gegebenenfalls Spülen der organischen Beschichtung und
VII. Trocknen oder/und Einbrennen der organischen Beschichtung oder
VIII. gegebenenfalls Trocknen der organischen Beschichtung und Beschichten mit einer gleichartigen oder weiteren Beschichtungszusammensetzung vor einem Trocknen oder/und Einbrennen,
**dadurch gekennzeichnet,**
**dass** in Schritt II die Beschichtung mit einer wässerigen Zusammensetzung in Form Dispersion oder/und Suspension erfolgt, wobei einer Dispersion aus filmbildenden Polymeren mit einem Feststoffgehalt von 2 bis 40 Gew.-% und einer mittleren Partikelgröße von 10 bis 1000 nm mindestens ein anionischer Polyelektrolyt in einer Menge von 0,01 bis 5,0 Gew.-% bezogen auf die gesamte Masse des resultierenden Gemisches zugesetzt wird, wobei die wässerige Zusammensetzung einen pH-Wert im Bereich von 4 bis 11 aufweist und eine Beschichtung auf Basis eines ionogenen Gels ausbildet, welches aus der metallischen Oberfläche herausgelöste Kationen bindet und diese Kationen aus einer Vorbehandlungsstufe oder/und aus der Kontaktierung im Schritt II stammen.

2. Verfahren nach Anspruch 1, **dadurch gekennzeichnet, dass** der anionische Polyelektrolyt a) mindestens ein Polysacchariden auf Basis von Glykogenen, Amylosen, Amylopektinen, Callosen, Agar, Alginen, Alginaten, Pektinen, Carrageenen, Cellulosen, Chitinen, Chitosanen, Curdlanen, Dextranen, Fruktanen, Kollagenen, Gellan Gum, Gummi Arabicum, Stärken, Xanthanen, Traganth, Karayanen, Tarakernmehlen und Glucomannanen; **b)** mindestens ein anionischen Polyelektrolyten natürlichen Ursprungs auf Basis von Polyaminosäuren, Kollagenen, Polypeptiden, Ligninen und/oder **c**) mindestens ein synthetischen anionischen Polyelektrolyten auf Basis von Polyaminosäuren, Polyacrylsäuren, Polyacrylsäuren-Copolymere, Acrylamid-Copolymere, Ligninen, Polyvinylsulfonsäure, Polycarbonsäuren, Polyphosphorsäuren oder Polystyrolen enthält oder daraus besteht.

3. Verfahren nach Anspruch 1 oder 2, **dadurch gekennzeichnet, dass** der anionische Polyelektrolyt mindestens ein Polysaccharid auf Basis von Pektinen oder Gellan Gum enthält oder daraus besteht.

4. Verfahren nach Anspruch 1 oder 2, **dadurch gekennzeichnet, dass** die wässerige Zusammensetzung oder/und die hieraus hergestellte organische Beschichtung ein Gemisch aus mindestens zwei verschiedenen anionischen Polyelektrolyten enthält.

5. Verfahren nach Anspruch 4, **dadurch gekennzeichnet, dass** die wässerige Zusammensetzung oder/und die hieraus hergestellte organische Beschichtung ein Gemisch aus zwei Pektinen enthält.

6. Verfahren nach einem oder mehreren der vorherigen Ansprüche, **dadurch gekennzeichnet, dass** die wässerige Zusammensetzung oder/und die hieraus hergestellte organische Beschichtung mindestens ein anionisches Polysaccharid ausgewählt aus solchen mit einem Veresterungsgrad der Carboxyfunktion im Bereich von 5 bis 75 % bezogen auf die Gesamtzahl der Alkohol- und Carboxygruppen enthält.

7. Verfahren nach einem oder mehreren der vorherigen Ansprüche, **dadurch gekennzeichnet, dass** die wässerige Zusammensetzung oder/und die hieraus hergestellte organische Beschichtung mindestens ein anionisches Polysaccharid oder/und mindestens einen anionischen Polyelektrolyten ausgewählt aus solchen mit einem Molekulargewicht im Bereich von 500 bis 1000000 g/mol⁻¹.

8. Verfahren nach einem oder mehreren der vorherigen Ansprüche, **dadurch gekennzeichnet, dass** die wässerige Zusammensetzung oder/und die hieraus hergestellte organische Beschichtung mindestens ein anionisches Polysaccharid oder/und mindestens einen anionischen Polyelektrolyten ausgewählt aus solchen mit einem Amidierungsgrad der Carboxyfunktionen im Bereich von 1 bis 50 %, einem Epoxidierungsgrad der Carboxyfunktionen von bis zu 80 %.

9. Verfahren nach einem oder mehreren der vorherigen Ansprüche, **dadurch gekennzeichnet**, **dadurch gekennzeichnet, dass** die anionischen Polyelektrolyte modifiziert werden oder modifiziert sind mit Haftung vermittelnden Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl-und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

10. Verfahren nach einem oder mehreren der vorherigen Ansprüche, **dadurch gekennzeichnet, dass** die wässerige Zusammensetzung oder/und die hieraus hergestellte organische Beschichtung einen Gehalt an mindestens einem Komplexbildner für Metallkationen oder einem Polymer, welches Metallkationen komplexierend modifiziert ist, aufweist.

11. Verfahren nach Anspruch 10, **dadurch gekennzeichnet, dass** die wässerige Zusammensetzung oder/und die hieraus hergestellte organische Beschichtung einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweist.

12. Verfahren nach einem oder mehreren der vorherigen Ansprüche, **dadurch gekennzeichnet, dass** die wässerige Zusammensetzung oder/und die hieraus hergestellte organische Beschichtung mindestens eine Art von Kationen enthält, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Al, B, Ba, Ca, Cr, Co, Cu, Fe, Hf, In, K, Li, Mg, Mn, Mo, Na, Nb, Ni, Pb, Sn, Ta, Ti, V, W, Zn oder/und Zr.

13. Verfahren nach Anspruch 12, **dadurch gekennzeichnet, dass** als Kationen, die aus der metallischen Oberfläche herausgelöst werden/sind oder/und die der wässerigen Zusammensetzung zugesetzt werden/sind, Al, Cu, Fe oder/und Zn ausgewählt werden.

14. Verfahren nach einem oder mehreren der vorherigen Ansprüche, **dadurch gekennzeichnet, dass** die wässerige Zusammensetzung oder/und die hieraus hergestellte organische Beschichtung einen Gehalt an organischen Partikeln auf Basis von Polyacrylaten, Polyurethanen, Polyepoxiden und/oder deren Hybriden aufweist.

15. Verfahren nach einem oder mehreren der vorherigen Ansprüche, **dadurch gekennzeichnet, dass** die wässerige Zusammensetzung oder/und die hieraus hergestellte organische Beschichtung einen Gehalt an mindestens einem Emulgator aufweist.

16. Verfahren nach Anspruch 15, **dadurch gekennzeichnet, dass** die wässerige Zusammensetzung oder/und die hieraus hergestellte organische Beschichtung einen Gehalt an mindestens einem Emulgator ausgewählt aus solchen auf Basis von anionischen Emulgatoren aufweist.

17. Verfahren nach einem oder mehreren der vorherigen Ansprüche, **dadurch gekennzeichnet, dass** die wässerige Zusammensetzung oder/und die hieraus hergestellte organische Beschichtung mindestens ein Additiv ausgewählt aus Additiven bestehend aus der Gruppe von Bioziden, Dispergierhilfsmitteln, Filmbildungshilfmitteln, saure oder/und basische Hilfsmittel zum Einstellen des pH-Werts und Verdicker und Verlaufsmittel enthält.

18. Verfahren nach einem oder mehreren der vorherigen Ansprüche, **dadurch gekennzeichnet, dass** vor dem Kontaktieren und Beschichten der metallischen Oberflächen mit einer wässerigen Zusammensetzung in Verfahrensstufe II. die metallischen Oberflächen gereinigt, gebeizt oder/und vorbehandelt werden.

19. Verfahren nach einem oder mehreren der vorherigen Ansprüche, **dadurch gekennzeichnet, dass** die wässerige Zusammensetzung eine Beschichtung auf Basis eines ionogenen Gels ausbildet, und dass der dabei oder später ausgebildete Trockenfilm eine Dicke von mindestens 1 µm aufweist.

20. Verfahren nach einem oder mehreren der vorherigen Ansprüche, **dadurch gekennzeichnet, dass** die organische Beschichtung in 0,05 bis 20 Minuten im Tauchbad ausgebildet wird und nach dem Trocknen eine Trockenfilmdicke im Bereich von 5 bis 100 µm aufweist.

21. Wässerige Zusammensetzung eingesetzt in einem Verfahren gemäß einem oder mehreren der Ansprüche 1 bis 20, die in einer Dispersion aus filmbildenden Polymeren mit einem Feststoffgehalt von 2 bis 40 Gew.-% und einer mittleren Partikelgröße von 10 bis 1000 nm mindestens einen anionischen Polyelektrolyten in einer Menge von 0,01 bis 5,0 Gew.-% bezogen auf die gesamte Masse des resultierenden Gemisches enthält, wobei die wässerige Zusammensetzung einen pH-Wert im Bereich von 4 bis 11 aufweist.

22. Wässerige Zusammensetzung Anspruch 21, **dadurch gekennzeichnet, dass** die in einer Dispersion aus filmbildenden Polymeren einen Gehalt an organischen Partikeln auf Basis von Polyacrylaten, Polyurethanen, Polyepoxiden und/oder deren Hybriden, einen Gehalt an mindestens einem Komplexbildner ausgewählt aus solchen auf Basis von Maleinsäure, Alendronsäure, Itaconsäure, Citraconsäure oder Mesaconsäure oder Anhydriden oder Halbestern dieser Carbonsäuren und mindestens einen anionischen Polyelektrolyten auf Basis von Pektinen oder Gellan Gum aufweist.

23. Verwendung des Verfahrens nach einem der Ansprüche 1 bis 20 zur Beschichtung von Substraten, die Probleme bei der Beschichtung mit einem Elektrotauchlack bereitet haben.

## Claims

1. A method for coating metallic surfaces of substrates, comprising or consisting of the following steps:
I. providing a substrate having a cleaned, metallic surface,
II. contacting and coating metallic surfaces with an aqueous composition in dispersion and/or suspension form,
VI. optionally rinsing the organic coating and
VII. drying and/or baking the organic coating, or
VIII. optionally drying the organic coating and carrying out coating with a coating composition of the same kind or a further coating composition prior to drying and/or baking,
wherein
the coating in step II takes place with an aqueous composition in dispersion and/or suspension form, where a dispersion of film-forming polymers with a solids content of 2 to 40 wt% and an average particle size of 10 to 1000 nm is admixed with at least one anionic polyelectrolyte in an amount of 0.01 to 5.0 wt%, based on the total mass of the resulting mixture, where the aqueous composition has a pH in the range from 4 to 11 and forms a coating based on an ionogenic gel which binds cations extracted from the metallic surface, these cations originating from a pretreatment stage and/or from the contacting in step II.

2. The method according to claim 1, wherein the anionic polyelectrolyte comprises or consists of a) at least one polysaccharide based on glycogens, amyloses, amylopectins, calloses, agar, algins, alginates, pectins, carrageenans, celluloses, chitins, chitosans, curdlans, dextrans, fructans, collagens, gellan gum, gum arabic, starches, xanthans, tragacanth, karayans, tara gums, and glucomannans; **b**) at least one anionic polyelectrolyte of natural origin based on polyamino acids, collagens, polypeptides, lignins, and/or **c**) at least one synthetic anionic polyelectrolyte based on polyamino acids, polyacrylic acids, polyacrylic acid copolymers, acrylamide copolymers, lignins, polyvinylsulfonic acid, polycarboxylic acids, polyphosphoric acids or polystyrenes.

3. The method according to claim 1 or 2, wherein the anionic polyelectrolyte comprises or consists of at least one polysaccharide based on pectins or gellan gum.

4. The method according to claim 1 or 2, wherein the aqueous composition and/or the organic coating produced therefrom comprises a mixture of at least two different anionic polyelectrolytes.

5. The method according to claim 4, wherein the aqueous composition and/or the organic coating produced therefrom comprises a mixture of two pectins.

6. The method according to one or more of the preceding claims, wherein the aqueous composition and/or the organic coating produced therefrom comprises at least one anionic polysaccharide selected from those having a degree of esterification of the carboxyl function in the range from 5% to 75% based on the total number of alcohol and carboxyl groups.

7. The method according to one or more of the preceding claims, wherein the aqueous composition and/or the organic coating produced therefrom at least one anionic polysaccharide and/or at least one anionic polyelectrolyte selected from those having a molecular weight in the range from 500 to 1 000 000 g/mol⁻¹.

8. The method according to one or more of the preceding claims, wherein the aqueous composition and/or the organic coating produced therefrom at least one anionic polysaccharide and/or at least one anionic polyelectrolyte selected from those having a degree of amidation of the carboxyl functions in the range from 1% to 50%, a degree of epoxidation of the carboxyl functions of up to 80%.

9. The method according to one or more of the preceding claims, wherein, wherein the anionic polyelectrolytes are modified or have been modified with adhesion-promoting tie groups selected from the group consisting of chemical groups of polyfunctional epoxides, isocyanates, primary amines, secondary amines, tertiary amines, quaternary amines, amides, imides, imidazoles, formamides, Michael reaction products, carbodiimides, carbenes, cyclic carbenes, cyclocarbonates, polyfunctional carboxylic acids, amino acids, nucleic acids, methacrylamides, polyacrylic acids, polyacrylic acid derivatives, polyvinyl alcohols, polyphenols, polyols having at least one alkyl and/or aryl radical, caprolactam, phosphoric acids, phosphoric esters, epoxide esters, sulfonic acids, sulfonic esters, vinylsulfonic acids, vinylphosphonic acids, catechol, silanes and also the silanols and/or siloxanes formed from them, triazines, thiazoles, thiazines, dithiazines, acetals, hemiacetals, quinones, saturated fatty acids, unsaturated fatty acids, alkyds, esters, polyesters, ethers, glycols, cyclic ethers, crown ethers, anhydrides, and also of acetylacetones and of beta-diketo groups, carbonyl groups, and hydroxyl groups.

10. The method according to one or more of the preceding claims, wherein the aqueous composition and/or the organic coating produced therefrom includes at least one complexing agent for metal cations, or a polymer which has been modified for complexation of metal cations.

11. The method according to claim 10, wherein the aqueous composition and/or the organic coating produced therefrom includes at least one complexing agent selected from those based on maleic acid, alendronic acid, itaconic acid, citraconic acid or mesaconic acid, or the anhydrides or monoesters of these carboxylic acids.

12. The method according to one or more of the preceding claims, wherein the aqueous composition and/or the organic coating produced therefrom comprises at least one kind of cations selected from those based on cationic salts selected from the group consisting of melamine salts, nitroso salts, oxonium salts, ammonium salts, salts with quaternary nitrogen cations, salts of ammonium derivatives, and metal salts of Al, B, Ba, Ca, Cr, Co, Cu, Fe, Hf, In, K, Li, Mg, Mn, Mo, Na, Nb, Ni, Pb, Sn, Ta, Ti, V, W, Zn and/or Zr.

13. The method according to claim 12, wherein cations selected that are extracted from the metallic surface and/or added to the aqueous composition are Al, Cu, Fe and/or Zn.

14. The method according to one or more of the preceding claims, wherein the aqueous composition and/or the organic coating produced therefrom includes organic particles based on polyacrylates, polyurethanes, polyepoxides and/or hybrids thereof.

15. The method according to one or more of the preceding claims, wherein the aqueous composition and/or the organic coating produced therefrom includes at least one emulsifier.

16. The method according to claim 15, wherein the aqueous composition and/or the organic coating produced therefrom includes at least one emulsifier selected from those based on anionic emulsifiers.

17. The method according to one or more of the preceding claims, wherein the aqueous composition and/or the organic coating produced therefrom comprises at least one additive selected from additives consisting of the group of biocides, dispersing assistants, film-forming assistants, acidic and/or basic auxiliaries for adjusting the pH, and thickeners and flow control agents.

18. The method according to one or more of the preceding claims, wherein before the contacting and coating of the metallic surfaces with an aqueous composition in method stage II., the metallic surfaces are cleaned, pickled and/or pretreated.

19. The method according to one or more of the preceding claims, wherein the aqueous composition forms a coating based on an ionogenic gel, and wherein the dry film formed in this process or later has a thickness of at least 1 µm.

20. The method according to one or more of the preceding claims, wherein the organic coating forms in 0.05 to 20 minutes in the dipping bath and after drying has a dry film thickness in the range from 5 to 100 µm.

21. An aqueous composition used in a method according to one or more of claims 1 to 20, which, in a dispersion of film-forming polymers having a solids content of 2 to 40 wt% and an average particle size of 10 to 1000 nm, comprises at least one anionic polyelectrolyte in an amount of 0.01 to 5.0 wt%, based on the total mass of the resulting mixture, where the aqueous composition has a pH in the range from 4 to 11.

22. The aqueous composition claim 21, wherein the in a dispersion of film-forming polymers includes organic particles based on polyacrylates, polyurethanes, polyepoxides and/or hybrids thereof, includes at least one complexing agent selected from those based on maleic acid, alendronic acid, itaconic acid, citraconic acid or mesaconic acid or anhydrides or monoesters of these carboxylic acids, and at least one anionic polyelectrolyte based on pectins or gellan gum.

23. The use of the method according to any of claims 1 to 20 for coating substrates which have caused problems in the case of coating with an electrodeposition coating material.

## Revendications

1. Procédé de revêtement de surfaces métalliques de substrats, comprenant les étapes suivantes ou constitué par les étapes suivantes :
I. la préparation d'un substrat comprenant une surface métallique nettoyée,
II. la mise en contact et le revêtement de surfaces métalliques avec une composition aqueuse sous la forme d'une dispersion et/ou d'une suspension,
VI. éventuellement le rinçage du revêtement organique et
VII. le séchage et/ou la combustion du revêtement organique ou
VIII. éventuellement le séchage du revêtement organique et le revêtement avec une composition de revêtement de même type ou autre avant un séchage et/ou une combustion,
**caractérisé en ce que**
à l'étape II, le revêtement avec une composition aqueuse a lieu sous la forme d'une dispersion et/ou d'une suspension, au moins un polyélectrolyte anionique étant ajouté en une quantité de 0,01 à 5,0 % en poids par rapport à la masse totale du mélange résultant à une dispersion de polymères filmogènes ayant une teneur en solides de 2 à 40 % en poids et une taille de particule moyenne de 10 à 1 000 nm, la composition aqueuse présentant un pH dans la plage allant de 4 à 11 et formant un revêtement à base d'un gel ionogène, qui lie les cations extraits de la surface métallique, ces cations provenant d'une étape de prétraitement et/ou de la mise en contact à l'étape II.

2. Procédé selon la revendication 1, **caractérisé en ce que** le polyélectrolyte anionique contient a) au moins un polysaccharide à base de glycogènes, d'amyloses, d'amylopectines, de calloses, d'agar-agar, d'algines, d'alginates, de pectines, de carraghénanes, de celluloses, de chitines, de chitosans, de curdlanes, de dextranes, de fructanes, de collagènes, de gomme gellane, de gomme arabique, d'amidons, de xanthanes, de tragacanthe, de gomme karaya, de gomme tara et de glucomannanes ; b) au moins un polyélectrolyte anionique d'origine naturelle à base d'acides polyaminés, de collagènes, de polypeptides, de lignines et/ou c) au moins un polyélectrolyte anionique synthétique à base d'acides polyaminés, d'acides polyacryliques, de copolymères d'acides polyacryliques, de copolymères d'acrylamide, de lignines, d'acide polyvinylsulfonique, d'acides polycarboxyliques, d'acides polyphosphoriques ou de polystyrènes, ou en est constitué.

3. Procédé selon la revendication 1 ou 2, **caractérisé en ce que** le polyélectrolyte anionique contient au moins un polysaccharide à base de pectines ou de gomme gellane ou en est constitué.

4. Procédé selon la revendication 1 ou 2, **caractérisé en ce que** la composition aqueuse et/ou le revêtement organique fabriqué à partir de celle-ci contiennent un mélange d'au moins deux polyélectrolytes anioniques différents.

5. Procédé selon la revendication 4, **caractérisé en ce que** la composition aqueuse et/ou le revêtement organique fabriqué à partir de celle-ci contiennent un mélange de deux pectines.

6. Procédé selon une ou plusieurs des revendications précédentes, **caractérisé en ce que** la composition aqueuse et/ou le revêtement organique fabriqué à partir de celle-ci contiennent au moins un polysaccharide anionique choisi parmi ceux ayant un degré d'estérification de la fonction carboxy dans la plage allant de 5 à 75 % par rapport au nombre total de groupes alcool et carboxy.

7. Procédé selon une ou plusieurs des revendications précédentes, **caractérisé en ce que** la composition aqueuse et/ou le revêtement organique fabriqué à partir de celle-ci au moins un polysaccharide anionique et/ou au moins un polyélectrolyte anionique choisi parmi ceux ayant un poids moléculaire dans la plage allant de 500 à 1 000 000 g/mol⁻¹.

8. Procédé selon une ou plusieurs des revendications précédentes, **caractérisé en ce que** la composition aqueuse et/ou le revêtement organique fabriqué à partir de celle-ci au moins un polysaccharide anionique et/ou au moins un polyélectrolyte anionique choisi parmi ceux ayant un degré d'amidation des fonctions carboxy dans la plage allant de 1 à 50 %, un degré d'époxydation des fonctions carboxy de jusqu'à 80 %.

9. Procédé selon une ou plusieurs des revendications précédentes, caractérisé en ce **caractérisé en ce que** les polyélectrolytes anioniques sont modifiés avec des groupes adhésifs conférant une adhésion choisis dans le groupe constitué par les groupes chimiques d'époxydes multifonctionnels, d'isocyanates, d'amines primaires, d'amines secondaires, d'amines tertiaires, d'amines quaternaires, d'amides, d'imides, d'imidazoles, de formamides, de produits de réaction de Michael, de carbodiimides, de carbènes, de carbènes cycliques, de cyclocarbonates, d'acides carboxyliques multifonctionnels, d'acides aminés, d'acides nucléiques, de méthacrylamides, d'acides polyacryliques, de dérivés d'acides polyacryliques, d'alcools polyvinyliques, de polyphénols, de polyols contenant au moins un radical alkyle et/ou aryle, de caprolactame, d'acides phosphoriques, d'esters d'acides phosphoriques, d'esters d'époxydes, d'acides sulfoniques, d'esters d'acides sulfoniques, d'acides vinylsulfoniques, d'acides vinylphosphoniques, de catéchol, de silanes, ainsi que des silanols et/ou siloxanes formés à partir de ceux-ci, de triazines, de thiazoles, de thiazines, de dithiazines, d'acétals, de semi-acétals, de quinones, d'acides gras saturés, d'acides gras insaturés, d'alkydes, d'esters, de polyesters, d'éthers, de glycols, d'éthers cycliques, d'éthers couronnes, d'anhydrides, ainsi que d'acétylacétones et de groupes bêta-dicéto, de groupes carbonyle et de groupes hydroxy.

10. Procédé selon une ou plusieurs des revendications précédentes, **caractérisé en ce que** la composition aqueuse et/ou le revêtement organique fabriqué à partir de celle-ci présentent une teneur en au moins un complexant pour cations métalliques ou un polymère qui est modifié pour la complexation de cations métalliques.

11. Procédé selon la revendication 10, **caractérisé en ce que** la composition aqueuse et/ou le revêtement organique fabriqué à partir de celle-ci présentent une teneur en au moins un complexant choisi parmi ceux à base d'acide maléique, d'acide alendronique, d'acide itaconique, d'acide citraconique ou d'acide mésaconique ou les anhydrides ou les semi-esters de ces acides carboxyliques.

12. Procédé selon une ou plusieurs des revendications précédentes, **caractérisé en ce que** la composition aqueuse et/ou le revêtement organique fabriqué à partir de celle-ci contiennent au moins un type de cations, choisis parmi ceux à base de sels à effet cationique choisis dans le groupe constitué par les sels de mélamine, les sels nitroso, les sels d'oxonium, les sels d'ammonium, les sels avec des cations d'azote quaternaire, les sels de dérivés d'ammonium et les sels métalliques d'Al, B, Ba, Ca, Cr, Co, Cu, Fe, Hf, In, K, Li, Mg, Mn, Mo, Na, Nb, Ni, Pb, Sn, Ta, Ti, V, W, Zn et/ou Zr.

13. Procédé selon la revendication 12, **caractérisé en ce qu'**Al, Cu, Fe et/ou Zn sont choisis en tant que cations qui sont extraits de la surface métallique et/ou qui sont ajoutés à la composition aqueuse.

14. Procédé selon une ou plusieurs des revendications précédentes, **caractérisé en ce que** la composition aqueuse et/ou le revêtement organique fabriqué à partir de celle-ci présentent une teneur en particules organiques à base de polyacrylates, de polyuréthanes, de polyépoxydes et/ou leurs hybrides.

15. Procédé selon une ou plusieurs des revendications précédentes, **caractérisé en ce que** la composition aqueuse et/ou le revêtement organique fabriqué à partir de celle-ci présentent une teneur en au moins un émulsifiant.

16. Procédé selon la revendication 15, **caractérisé en ce que** la composition aqueuse et/ou le revêtement organique fabriqué à partir de celle-ci présentent une teneur en au moins un émulsifiant choisi parmi ceux à base d'émulsifiants anioniques.

17. Procédé selon une ou plusieurs des revendications précédentes, **caractérisé en ce que** la composition aqueuse et/ou le revêtement organique fabriqué à partir de celle-ci contiennent au moins un additif choisi parmi les additifs du groupe constitué par les biocides, les adjuvants de dispersion, les adjuvants filmogènes, les adjuvants acides et/ou basiques pour l'ajustement du pH et les épaississants et les agents d'égalisation.

18. Procédé selon une ou plusieurs des revendications précédentes, **caractérisé en ce qu'**avant la mise en contact et le revêtement des surfaces métalliques avec une composition aqueuse à l'étape de procédé II., les surfaces métalliques sont nettoyées, décapées et/ou prétraitées.

19. Procédé selon une ou plusieurs des revendications précédentes, **caractérisé en ce que** la composition aqueuse forme un revêtement à base d'un gel ionogène et **en ce que** le film sec formé alors ou ultérieurement présente une épaisseur d'au moins 1 µm.

20. Procédé selon une ou plusieurs des revendications précédentes, **caractérisé en ce que** le revêtement organique est formé en 0,05 à 20 minutes dans le bain d'immersion et présente après le séchage une épaisseur de film sec dans la plage allant de 5 à 100 µm.

21. Composition aqueuse utilisée dans un procédé selon une ou plusieurs des revendications 1 à 20, qui contient dans une dispersion de polymères filmogènes ayant une teneur en solides de 2 à 40 % en poids et une taille de particule moyenne de 10 à 1 000 nm au moins un polyélectrolyte anionique en une quantité de 0,01 à 5,0 % en poids, par rapport à la masse totale du mélange résultant, la composition aqueuse présentant un pH dans la plage allant de 4 à 11.

22. Composition aqueuse la revendication 21, **caractérisée en ce que** la dans une dispersion de polymères filmogènes présente une teneur en particules organiques à base de polyacrylates, de polyuréthanes, de polyépoxydes et/ou leurs hydrures, une teneur en au moins un complexant choisi parmi ceux à base d'acide maléique, d'acide alendronique, d'acide itaconique, d'acide citraconique ou d'acide mésaconique ou les anhydrides ou semi-esters de ces acides carboxyliques et au moins un polyélectrolyte anionique à base de pectines ou de gomme gellane.

23. Utilisation du procédé selon l'une quelconque des revendications 1 à 20 pour le revêtement de substrats qui ont causé des problèmes lors du revêtement avec un vernis pour électrodéposition.
